# EUROPÄISCHE PATENTSCHRIFT

(11) **EP 1 000 225 B1**
(45) Veröffentlichungstag und Bekanntmachung des Hinweises auf die Patenterteilung: **05.06.2002**
(21) Anmeldenummer: 98947319.4
(22) Anmeldetag: 20.07.1998
(51) Int. Cl.: F01D 5/28

(54) **TURBINENSCHAUFEL SOWIE VERFAHREN ZUR HERSTELLUNG EINER TURBINENSCHAUFEL**
TURBINE BLADE AND A METHOD FOR THE PRODUCTION THEREOF
AUBE DE TURBINE ET SON PROCEDE DE PRODUCTION

(30) Priorität: 29.07.1997 DE 19732653
(43) Veröffentlichungstag der Anmeldung: 17.05.2000
(73) Patentinhaber: SIEMENS AKTIENGESELLSCHAFT, 80333 München (DE)
(72) Erfinder: ESSER, Winfried, D-44805 Bochum (DE)
(86) Internationale Anmeldenummer: DE9802037
(87) Internationale Veröffentlichungsnummer: WO9906672

(56) Entgegenhaltungen:
- US-A- 3 650 635
- US-A- 5 072 771

## Beschreibung

Die Erfindung betrifft eine Turbinenschaufel, insbesondere eine Gasturbinenschaufel, welche sich entlang einer Hauptachse von einem Fußbereich über einen Schaufelblattbereich zu einem Kopfbereich erstreckt. Die Erfindung betrifft weiterhin ein Verfahren zur Herstellung einer Turbinenschaufel, insbesondere einer Gasturbinenschaufel.

In der DE-AS 22 42 111 sind eine Vorrichtung und ein Verfahren zur Herstellung von Gußstücken, insbesondere Gasturbinenschaufeln, mit gerichtet erstarrtem Gefüge beschrieben. Das Verfahren und die Vorrichtung dienen zur Herstellung möglichst lunkerfreier Gußstücke. Die gerichtete Erstarrung mit einem einkristallinen oder stengelförmigen Gefüge durch eine Kontrolle über den Beginn des Kornwachstums erreicht. Bei Durchführung des Verfahrens wird eine mit geschmolzenem Metall zu füllende Schalenform auf einer Abschreckplatte abgesetzt und auf eine Temperatur aufgeheizt, die insbesondere 150 °C oberhalb der Temperatur des Schmelzpunktes des zu gießenden Metalls liegt. Das geschmolzene Metall wird in die Schalenform eingefüllt und die Abschreckplatte mit der Schalenform in ein Kühlflüssigkeitsbad eingetaucht. Die Temperatur der Kühlflüssigkeit liegt wesentlich unterhalb des Schmelzpunktes des Metalls. Die Abschreckplatte ist bereits vor dem Eingießen des Metalls in die Schalenform durch das Kühlmittel gekühlt. Für die Herstellung einer Turbinenschaufel wird als Metall eine Superlegierung, wie beispielsweise Mar-M 200, verwendet. Das Eintauchen der Schalenform in das Kühlflüssigkeitsbad erfolgt mit einer derartigen Geschwindigkeit, daß die Oberfläche des Kühlflüssigkeitsbades dem Solituspegel nicht voreilt, so daß die Wärmeabfuhr aus der breiigen Zone der erstarrenden Legierung vertikal abwärts erfolgt und die flüssig-feste Grenzfläche im wesentlichen horizontal bleibt. Dies soll das Wachstums eines Einkristalls sicherstellen und eine Keimbildung von Körnern an der Oberfläche der Schalenform verhindern. Bei der Herstellung einer Turbinenschaufel als Einkristall wird die Schalenform auf über 1500 °C erhitzt. Als Kühlflüssigkeit wird flüssiges Zinn verwendet, welches eine Temperatur von etwa 260 °C aufweist. Die Geschwindigkeit, mit der die Schalenform in das Flüssigkeitsbad eingetaucht wird, beträgt etwa 3 m/h. Die Turbinenschaufel wird hierbei als Vollmaterialschaufel überwiegend aus Nickellegierungen in einkristalliner Form, mit einer Gesamtlänge von etwa 10 cm gegossen.

In der EP-0 010 538 A1 sind ein geschwindigkeitskontrolliertes Verfahren zur gerichteten Erstarrung sowie ein nach diesem Verfahren hergestelltes Gußstück angegeben. Für die gerichtete Erstarrung eines Gußstückes ist von besonderer Bedeutung das Verhältnis aus Temperaturgradient G und Erstarrungsgeschwindigkeit R. Für eutektische Superlegierungen muß das Verhältnis von G zu R einen bestimmten charakteristischen Wert überschreiten, damit eine gerichtete Erstarrung stattfindet. Die gerichtete Erstarrung wird hierbei hauptsächlich verwendet, um ein Gußstück für eine Gasturbine herzustellen, welches eine stengelförmige Kornstruktur, ein Einkristall oder ein eindimensional gerichtetes Eutektikum ist. Anwendung findet die Methode der gerichteten Erstarrung bei Superlegierungen wie U-700, B-1900, Mar-M 200 und IN-100. Testversuche zur Herstellung einer Gasturbinenschaufel für die erste Stufe eines Flugzeugtriebwerkes in einkristalliner Form wurden mit hoher Eintauchgeschwindigkeit bei Strahlungskühlung und alternativ bei Kühlung mittels eines flüssigen Metalls durchgeführt. Die Geschwindigkeit lag bei Strahlungskühlung zwischen 7,5 cm/h und 33 cm/h. Das gerichtet erstarrte Gußstück wurde als Vollkörper gegossen.

In dem Artikel "A formal analysis from formally controlled solidification (TCS) trials investment castings" von Patrick D. Ferro, Sanjay B. Shendye in "Superalloys", 1996, Seiten 531 bis 535, The Minerals, Metals and Materials Society 1996, ist ein Verfahren zur thermisch kontrollierten Erstarrung großer Gußstücke mit Bereichen einer dünnen Wandstruktur beschrieben. Ein nach diesem Verfahren hergestelltes Gußstück unterscheidet sich gegenüber einem gerichtet erstarrten Gußstück oder einem einkristallinen Gußstück insbesondere durch die Korngröße. Gerichtet erstarrte und einkristalline Gußstücke zeichnen sich durch große und mittlere Korngrößen aus, ein nach dem thermisch kontrollierten Erstarrungsverfahren hergestelltes Gußstück weist demgegenüber eine mittlere Korngröße wie ein konventionell hergestelltes Gußstück auf. Darüber hinaus hat ein nach dem thermisch kontrollierten Erstarrungsverfahren hergestelltes Gußstück eine konsistente und gleichmäßige Korngröße in allen Gußbereichen. Bei dem thermisch kontrollierten Erstarrungsverfahren wird ein Verhältnis aus Temperaturgradient G und Erstarrungsgeschwindigkeit R verwendet, das zu einer Mikrostruktur mit relativ kleinen, gleichgerichteten Körnern und minimalem Schwund führt. Das Verfahren wird in einem Vakuumofen durchgeführt, bei dem eine Gießform über eine Induktionsheizung in einer Heizzone erwärmt wird und zur Erstarrung des geschmolzenen Metalls aus dieser Heizzone herausgefahren wird, so daß eine Abkühlung und Erstarrung des geschmolzenen Metalls durch Strahlungskühlung erfolgt. Herstellung einer Gießform sowie Aufbau eines entsprechenden Ofens sind beispielsweise in der US-PS 4,724,891 beschrieben. Hierin wird die Herstellung eines Gehäuseteils einer Turbinenanlage beschrieben, welches bereichsweise eine dünne Wandstruktur mit einer Fläche von über 30 cm² und einer Wandstärke kleiner als 0,125 cm aufweist. Das Verhältnis aus der Fläche des Bereiches mit geringer Wandstärke und der Wandstärke liegt bei mindestens 40.

Eine Leitschaufel einer Gasturbine mit einer Führung von Kühlgas zu deren Kühlung ist in der US-PS 5,419,039 beschrieben. Die Leitschaufel ist als ein Gußstück ausgeführt bzw. aus zwei Gußstücken zusammengesetzt. Sie weist in ihrem Inneren eine Zuführung von Kühlgas aus dem Verdichter der zugeordneten Gasturbinenanlage auf. In ihrer der Heißgasströmung der Gasturbine ausgesetzten, die Zuführung umschließenden Wandstruktur sind eingegossene einseitig offene Kühltaschen vorgesehen. Diese sind an der Außenseite der Wandstruktur sowohl in Strömungsrichtung des Heißgases als auch senkrecht dazu entlang der Hauptausdehnungsrichtung der Leitschaufel angeordnet. In jede Kühltasche strömt von der Zuführung über eine Mehrzahl von Löchern in der Wandstruktur Kühlluft ein. Die Kühltasche wird in Strömungsrichtung des Heißgases von der Kühlluft durchströmt, welche in einem bereits durch das Gießen der Leitschaufel gebildeten Öffnungsbereich in die Strömung des Heißgases austritt. Hierdurch wird in beschränktem Maße an der äußeren Oberfläche der Wandstruktur eine Filmkühlung erreicht. In der Kühltasche können ein oder mehrere nicht näher spezifizierte Sockel zur Verbesserung der Wärmeleitung vorgesehen sein. Eine Gasturbinenschaufel mit einer zentralen Kühlluftzuführung und Kühlluftbohrungen zur Erzielung einer Filmkühlung ist beispielsweise in der EP 0 742 347 A2 beschrieben.

Siehe auch die Dokumente US-A-3 650 635 und US-A-5 072 771.

Aufgabe der Erfindung ist es, eine Turbinenschaufel mit einer kühlbaren Wandstruktur anzugeben. Eine weitere Aufgabe besteht darin, ein Verfahren zur Herstellung einer Turbinenschaufel anzugeben.

Erfindungsgemäß wird die auf eine Turbinenschaufel gerichtete Aufgabe durch eine solche Turbinenschaufel gelöst, die sich entlang einer Hauptachse von einem Fußbereich über einen Schaufelblattbereich zu einem Kopfbereich erstreckt, und zumindest in dem Schaufelblattbereich eine Zuführung für Kühlfluid aufweist, welche Zuführung von einer Schaufelaußenwand geringer Wandstärke umgeben ist, wobei die Schaufelaußenwand einen metallischen Werkstoff mit einer ungerichteten Kornstruktur mit einer mittleren Korngröße in der Größenordnung der Korngröße eines konventionell gegossenen Werkstoffs aufweist.

Eine solche Turbinenschaufel, insbesondere eine Gasturbinenschaufel für eine stationäre Gasturbine, läßt sich beispielsweise durch das Verfahren der thermisch kontrollierten Erstarrung herstellen. Hierdurch wird eine hohe Wärmeleitfähigkeit erreicht, bei gleichzeitiger Vermeidung von Gefügefehlern, wie sie bei dem Verfahren zum gerichteten einkristallen Erstarrung auftreten könnten. Die Schaufelaußenwand weist somit weder ein stengelförmiges gerichtet erstarrtes Gefüge noch ein einkristallines Gefüge auf. Das Gefüge weist vielmehr eine "equiaxed" Kornstruktur auf, bei der die Körner eine weitgehend unstrukturierte Orientierung aufweisen, d.h. das Gefüge quasi-isotrop ist. Die Turbinenschaufel ist lunker- und porenfrei erstarrt, wobei dünne ebene Wände mit hinreichender thermischer und mechanischer Stabilität gegossen sind. Es ist sowohl bei großen Wanddickenunterschieden zwischen dem Schaufelblattbereich mit gegebenenfalls daran als Wärmeübertragungselement angeordneten Stegen und dem massiven Fußbereich oder am Fußbereich bzw. gegebenenfalls am Kopfbereich angebrachten massiven Platten in allen Bereichen die gleiche Kristallstruktur und damit die gleichen physikalischen Eigenschaften erreicht. Die Turbinenschaufel kann aus einer Kobaltbasislegierung, z.B. Mar-M 509 oder FSX 414, mit einer hohen Wärmeleitfähigkeit hergestellt sein, wenn die geforderten Festigkeitsanforderungen durch die Kobaltbasislegierung erfüllt werden. Die Turbinenschaufel kann auch aus einer Nickelbasislegierung, beispielsweise Renc 80, IN 738LC oder IN 939, hergestellt sein. Die Legierung, insbesondere die Kobaltbasislegierung, kann auch in einem Ofen gegossen werden und außerhalb des Ofens dann kontrolliert abgekühlt werden. Vorzugsweise wird die Legierung als Feinguß gegossen.

Zur Erhöhung der Kühlwirkung einer von einem Heißgas umströmbaren Turbinenschaufel weist diese vorzugsweise in ihrem Inneren Wärmeübertragungselemente auf, die wärmetechnisch mit der Schaufelaußenwand verbunden und von dem Kühlfluid, insbesondere von von dem Verdichter einer Gasturbinenanlage zugeführter Kühlluft, umströmbar sind. Die Wand der Turbinenschaufel im Schaufelblattbereich kann doppelwandig mit einer Innenwand, die die Zuführung umgibt, ausgeführt sein, so daß zwischen Innenwand und Außenwand zumindest ein Kühlbereich gebildet ist, der über einen Einlaß mit der Zuführung strömungstechnisch verbunden ist.

Die wärmetechnisch mit der Außenwand verbundenen Wärmeübertragungselemente sind vorzugsweise in einer Hauptströmungsrichtung des Kühlfluides hintereinander angeordnet, wodurch eine wirksame Erwärmung des Kühlfluids in dem Kühlbereich über eine lange Wegstrecke ermöglicht und damit eine Kühlung der Außenwand gewährleistet ist. Ein doppelwandiger Aufbau ermöglicht eine Entkopplung der funktionellen Eigenschaften der Wandstruktur, wobei an die Außenwand geringere Anforderungen an die mechanische Stabilität gestellt werden können als an die Innenwand. Die Innenwand kann mithin, da sie nicht unmittelbar einer Heißgasströmung ausgesetzt ist, mit einer größeren Wandstärke als die Außenwand ausgeführt sein und im wesentlichen die mechanische Tragfunktion für die Turbinenschaufel übernehmen. Der Querschnitt des Kühlbereiches zwischen der Innenwand und der Außenwand ist vorzugsweise zur Ausbildung einer hohen Geschwindigkeit des Kühlfluides gering ausgebildet und liegt insbesondere im Bereich der Wandstärke der Außenwand. Durch einen kleinen durchströmten Querschnitt des Kühlbereiches und eine damit ausgebildete hohe Geschwindigkeit des Kühlfluides werden sehr hohe Wärmeübergangszahlen erreicht.

Das Kühlfluid kann in einem offenen Kühlkreis durch die Turbinenschaufel hindurchgeführt werden, wobei die Schaufelaußenwand einen Auslaß für Kühlfluid aufweist. Es ist ebenfalls eine Kühlung der Turbinenschaufel mit einem geschlossenen Kühlfluidkreislauf möglich, wobei eine Abführung für Kühlfluid im Inneren der Turbinenschaufel vorgesehen ist, die über den Kühlbereich strömungstechnisch mit der Zuführung verbunden ist.

Bei einem offenen Kühlkreis strömt Kühlfluid, insbesondere Kühlluft, aus dem Kühlbereich an die Außenwand aus und bildet einen kühlenden Film an der dem Heißgas aussetzbaren Oberfläche der Außenwand (Filmkühlung).

Die Wärmeübertragungselemente in einem Kühlbereich sind vorzugsweise entlang einer Linie in einer Reihe angeordnet, wobei die Linie gegenüber der Hauptströmungsrichtung vorzugsweise in einem Winkel von 90° geneigt ist. Die Hauptströmungsrichtung der Kühlluft in dem Kühlbereich ist vorzugsweise parallel oder antiparallel zur Strömungsrichtung des Heißgases und mithin im wesentlichen senkrecht zur Hauptachse der Turbinenschaufel. Die Wärmeübertragungselemente sind vorzugsweise säulenartig oder podestartig ausgebildet und reichen von der Außenwand bis an die Innenwand heran. Sie können auch mit der Innenwand fest verbunden sein. Der Querschnitt der Wärmeübertragungselemente ist jeweils den wärmeübertragungs- und strömungstechnischen Anforderungen angepaßt, beispielsweise kreisförmig, vieleckig oder nach Art eines Strömungsprofils ausgebildet. Die Wärmeübertragungselemente benachbarter Reihen sind vorzugsweise gegeneinander versetzt, insbesondere um den halben Abstand zweier entlang der Linie angeordneter Wärmeübertragungselemente. Hierdurch wird erreicht, daß die zwischen zwei entlang der Linie benachbarter Wärmeübertragungselemente hindurchströmenden Teilströme des Kühlfluids im wesentlichen vollständig mit einem in Hauptströmungsrichtung nachgeordneten Wärmeübertragungselement zum Austausch von Wärme in Kontakt kommen.

Der Auslaß sowie der Einlaß sind vorzugsweise als eine Bohrung oder mehrere Bohrungen ausgeführt. Diese können sich trichterförmig erweitern, wobei der Auslaß vorzugsweise um einen Winkel < 35° gegenüber der Hauptströmungsrichtung des Kühlfluides geneigt ist. Durch einen solchen spitzen Winkel wird die Ausbildung eines Kühlfilms auf der Oberfläche der Außenwand begünstigt. Es ist ebenfalls möglich, eine trichterförmige Öffnung nachträglich, beispielsweise durch Erodieren oder Herausarbeiten mittels Laserstrahlen, durchzuführen. Der Einlaß ist vorzugsweise entlang einer Achse gerichtet, die gegenüber der Außenwand geneigt ist, insbesondere auf der Außenwand senkrecht steht. Hierdurch ist zusätzlich eine Prallkühlung der Außenwand im Bereich des Einlasses erreichbar. Bei einer antiparallelen Führung des Kühlfluids ist eine Gegenstromkühlung erreichbar, wobei Kühlfluid und Heißgas in entgegengesetzten Richtungen strömen. Ein Kühlbereich mit Gegenstromkühlung ist vorzugsweise an der Saugseite der Turbinenschaufel in der Umgebung des Abströmbereichs so angeordnet, daß der zugeordnete Auslaß für Kühlfluid in Bezug auf die Strömung des Heißgases stromauf des Bereichs mit dem niedrigsten Druckniveau entlang der Saugseite strömenden Heißgases liegt. Dies ist insbesondere aerodynamisch von Vorteil, wobei die Strömung des Heißgases in dem Abströmbereich weitgehend durch austretendes Kühlfluid unbeeinflußt ist. Die Turbinenschaufel mit Fußbereich, Schaufelblattbereich und Kopfbereich sowie Innenwand und Außenwand und darin angeordneten Wärmeübertragungselementen kann über das Verfahren der thermisch kontrollierten Erstarrung als Ganzes durch Gießen in einem Arbeitsschritt hergestellt werden. Selbstverständlich kann die Turbinenschaufel auch zwei oder mehrere gegossene Teile enthalten, die mit geeigneten Methoden (Fügverfahren) nach dem Gießen miteinander fest verbunden werden. Vorzugsweise sind auch der Einlaß sowie der Auslaß bereits durch Gießen hergestellt worden. Die Turbinenschaufel weist vorzugsweise eine Vielzahl von Kühlbereichen sowohl entlang ihrer Hauptachse als auch in einer Ebene senkrecht zur Hauptachse auf. Die Turbinenschaufel eignet sich bevorzugt als Laufschaufel oder Leitschaufel einer Gasturbinenanlage, insbesondere einer stationären Gasturbine, in der Temperaturen von deutlich über 1000 °C des die Turbinenschaufel umströmenden Heißgases auftreten. Die Turbinenschaufel hat einen Schaufelblattbereich, welcher eine Höhe zwischen 5 cm und 50 cm aufweist. Die Wandstärke der Schaufelaußenwand und/oder der Innenwand hat vorzugsweise einen minimalen Wert zwischen 0,5 mm und 5 mm. Bei sehr dünnen Wandstärken können über den Querschnitt prinzipiell auch nur einige wenige Körner vorhanden sein. Die Korngröße kann hierbei im Bereich der Schaufelwand zwischen etwa 0,5 und 5 mm liegen und im restlichen Bereich der Schaufel (z.B. Schaufelfluß) zwischen 4 mm bis 10 mm betragen.

Die auf ein Verfahren zur Herstellung einer Turbinenschaufel, welche sich entlang einer Hauptachse von einem Fußbereich über einen Schaufelblattbereich zu einem Kopfbereich erstreckt und zumindest in dem Schaufelblattbereich eine Zuführung von Kühlfluid aufweist, welche von einer Schaufelaußenwand geringer Wandstärke umgeben ist, wird erfindungsgemäß dadurch gelöst, daß eine Gießform in einer Heizzone oberhalb der Schmelztemperatur des Werkstoffes der Turbinenschaufel gehalten, mit geschmolzenem Werkstoff gefüllt und so aus der Heizzone herausbewegt wird, daß der Werkstoff zumindest in der Schaufelaußenwand mit einer ungerichteten Kornstruktur mit einer mittleren Korngröße, die einer Korngröße eines konventionell gegossenen Werkstoffs im wesentlichen entspricht, erstarrt. Hierdurch ist eine Turbinenschaufel mit hinreichenden thermischen und mechanischen Festigkeitseigenschaften herstellbar, die sowohl in einem massiven als auch dünnwandigen Bereich eine im wesentlichen gleiche Kornstruktur aufweist. Die Prozeßparameter des Verfahrens, wie Temperatur in der Heizzone, Geschwindigkeit, mit der die Gießform aus der Heizzone herausgeführt wird, etc., sind der Größe und den gewünschten Festigkeitseigenschaften der Turbinenschaufel angepaßt. Das Verfahren kann eine auf die besonderen Erfordernisse zum Gießen einer Turbinenschaufel mit dünner Wandstruktur, gegebenenfalls einer Doppelwandstruktur, angepaßte Weiterbildung des in dem Artikel "Thermal Analysis from Thermally Controlled Solidification (TCS) Trials on Large Investment Castings" von Patrick D. Ferro et al beschriebenen Verfahrens zur thermisch kontrollierten Erstarrung eines Gußstückes sein.

Anhand der in der Zeichnung dargestellten Ausführungsbeispiele werden die Turbinenschaufel sowie das Verfahren zur Herstellung der Turbinenschaufel näher erläutert. Es zeigen schematisiert unter Darstellung der für die Erläuterung verwendeten konstruktiven und funktionellen Merkmale:
- FIG 1: eine Längsansicht einer Laufschaufel einer Gasturbine,
- FIG 2: eine Leitschaufel einer Gasturbine in einem Querschnitt,
- FIG 3: einen Längsschnitt durch einen Kühlbereich der Leitschaufel nach Figur 2mit Wärmeübertragungselementen,
- FIG 4: eine Leitschaufel einer Gasturbine in einem Querschnitt, und
- FIG 5: einen Längsschnitt durch eine Vorrichtung zur thermisch kontrollierten Erstarrung einer Leitschaufel.
Gleiche Bezugszeichen haben in den Figuren 1 bis 5 jeweils die gleiche Bedeutung.

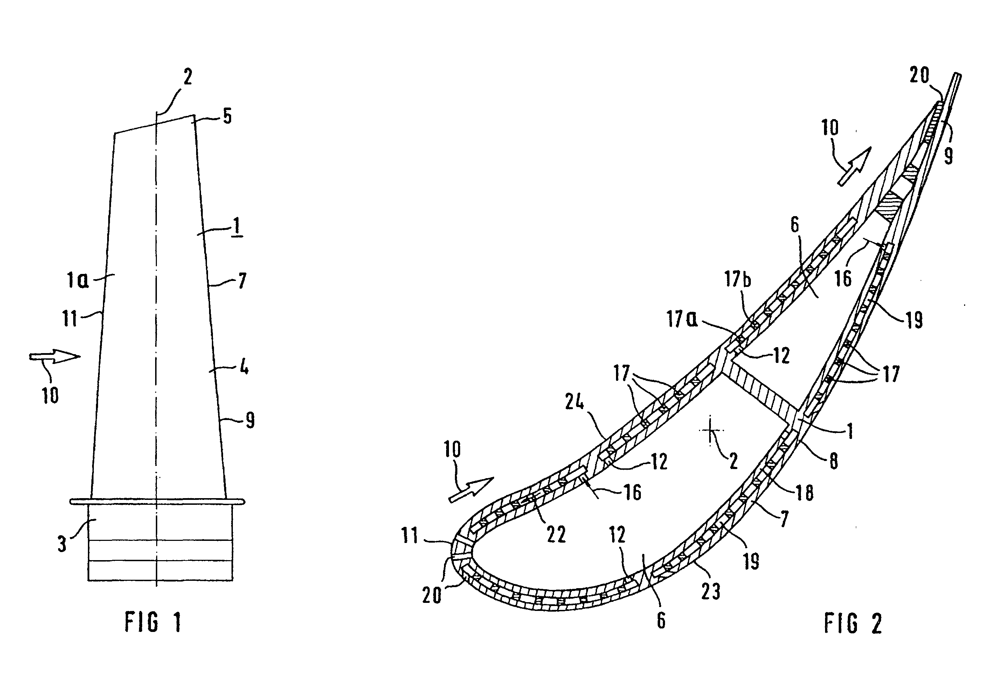

In Figur 1 ist eine sich entlang einer Hauptachse 2 von einem Fußbereich 3 über einen Schaufelblattbereich 4 zu einem Kopfbereich 5 erstreckende Turbinenschaufel 1, insbesondere eine Laufschaufel la einer stationären Gasturbine, dargestellt. Der Schaufelblattbereich 4 weist eine Schaufelaußenwand 7, einen Anscrömbereich 11 sowie einen Abströmbereich 9 auf. Die nicht näher dargestellte Gasturbine wird von einem heißen Fluid 10, einem Heißgas, durchströmt, welches die Turbinenschaufel 1 in dem Anströmbereich 11 anströmt und an der Außenwand 7 bis zu dem Abströmbereich 9 vorbeiströmt. Die Turbinenschaufel 1 weist eine Zuführung 6 für Kühlfluid 16 (siehe Figur 2) auf, welche durch den Fußbereich 3 in den Schaufelblattbereich 4 hineinführt. Das Kühlfluid 16 ist insbesonder komprimierte Verdichterluft, die von einem nicht dargestellten Verdichter der Gasturbinenanlage der Turbinenschaufel 1 zugeführt wird.

Gemäß Figur 2 sind sowohl an dem Anströmbereich 11, dem Abströmbereich 9, der Druckseite 24 sowie der Saugseite 23 der Turbinenschaufel 1 Auslässe 20 vorgesehen, durch die Kühlluft 6 in die Strömung des Heißgases 10 strömt. Die Auslässe 20 im Bereich der Druckseite 24 und der Saugseite 23 sind gegenüber der Außenwand 7 um einen Winkel, insbesondere kleiner 45°, geneigt, so daß die Kühlluft 16 an der Außenwand 7 anliegend strömt und dadurch auch eine Filmkühlung der Außenoberfläche der Außenwand 7 erreicht wird. Der Außenwand 7 ist eine Innenwand 18 zugeordnet, wobei zwischen Außenwand 7 und Innenwand 18 eine Mehrzahl von Kühlbereichen 19 mit einer im wesentlichen flächigen Ausdehnung anordnet sind. Jeder Kühlbereich 19 ist über einen Einlaß 12 mit einer Zuführung 6 für Kühlfluid 16 und über einen Auslaß mit dem die Turbinenschaufel 1 umströmenden Heißgas 10 strömungstechnisch verbunden. Jeder Kühlbereich 19 weist eine Mehrzahl hintereinander angeordneter Wärmeübertragungselemente 17 auf, die zumindest mit der Außenwand 7 wärmetechnisch verbunden sind. Das durch den Kühlbereich 19 strömende Kühlfluid 16 nimmt über die Wärmeübertragungselemente 17 sowie über einen unmittelbaren Kontakt mit der Außenwand 7 Wärme von der Außenwand 7 auf und führt dadurch zu einer effektiven Kühlung der Außenwand 7. Der Einlaß 12 ist vorzugsweise senkrecht zur Außenwand 7 gerichtet, so daß in den Kühlbereich 19 einströmendes Kühlfluid 16 auf die Außenwand 7 aufprallt und dadurch zusätzlich eine Prallkühlung erreicht wird.

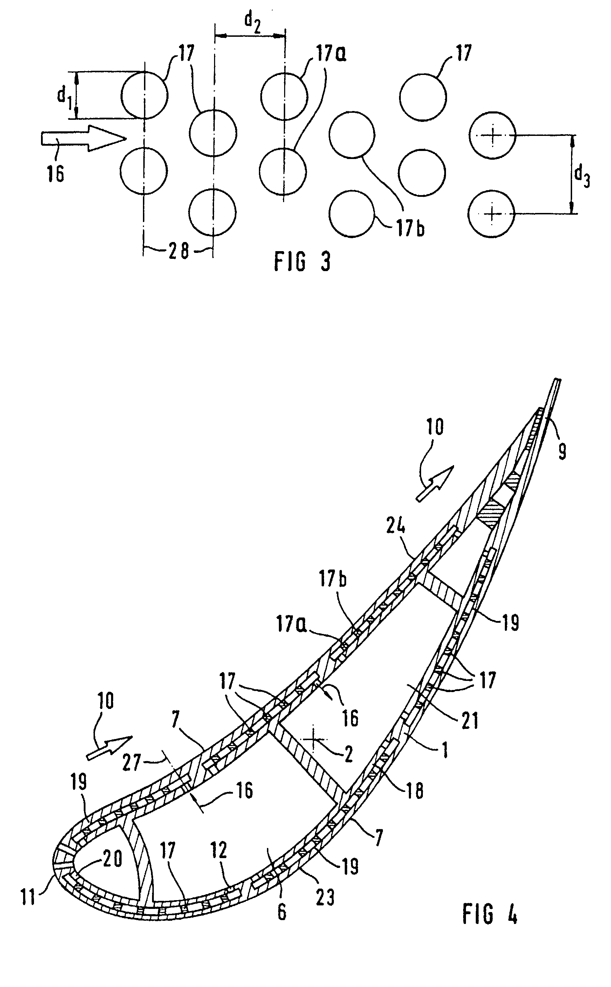

Figur 3 zeigt einen Ausschnitt eines Längsschnittes durch einen Kühlbereich 19 mit einer Mehrzahl kreisrunder podest-oder säulenartiger Wärmeübertragunselemente 17, 17a, 17b. Die Wärmeübertragungselemente 17, 17a, 17b sind jeweils in einer Reihe 28 senkrecht zur Strömungsrichtung des Kühlfluides 16 angeordnet. Die Wärmeübertragungselemente 17, 17a, 17b unmittelbar hintereinander angeordneter Reihen 28 sind versetzt zueinander angeordnet, so daß Kühlfluid, welches zwischen in einer Reihe benachbarter Wärmeübertragungselemente 17 hindurchströmt, auf ein Wärmeübertragungselement 17 der nachfolgenden Reihe 28 aufprallt. Hierdurch wird eine besonders hohe Kontaktzeit des Kühlfluides mit den Wärmeübertragungselementen 17, 17a, 17b gewährleistet. Benachbarte Reihen 28 sind mit einem Abstand d₂ voneinander beabstandet; innerhalb einer Reihe 28 sind die Wärmeübertragungselemente 17, 17a, 17b jeweils um einen Abstand d₃ beabstandet; die im Querschnitt kreisförmigen Wärmeübertragungselemente 17 haben einen Durchmesser d₁. Der Abstand d₂ zwischen zwei benachbarten Reihen 28 ist in etwa gleich oder etwas geringer als der Abstand d₃ zwischen benachbarten Wärmeübertragungselementen 17.

Figur 4 zeigt eine Turbinenschaufel 1 in einem Querschnitt analog zu Figur 2. Gegenüber Figur 2 weist die Turbinenschaufel 1 einen zumindest teilweise geschlossenen Kühlkreislauf für das Kühlfluid 16 auf. Hierzu ist neben einer Zuführung 6 auch eine Abführung 21 für Kühlfluid 16 in der Turbinenschaufel 1 vorgesehen. Die Kühlbereiche 19 weisen mithin einen Auslaß 20 auf, der nicht zu dem Heißgas 10 sondern zu der Abführung 21 führt. Hinsichtlich des weiteren Aufbaus der Turbinenschaufel 1 wird auf die Beschreibung zur Figur 2 verwiesen.

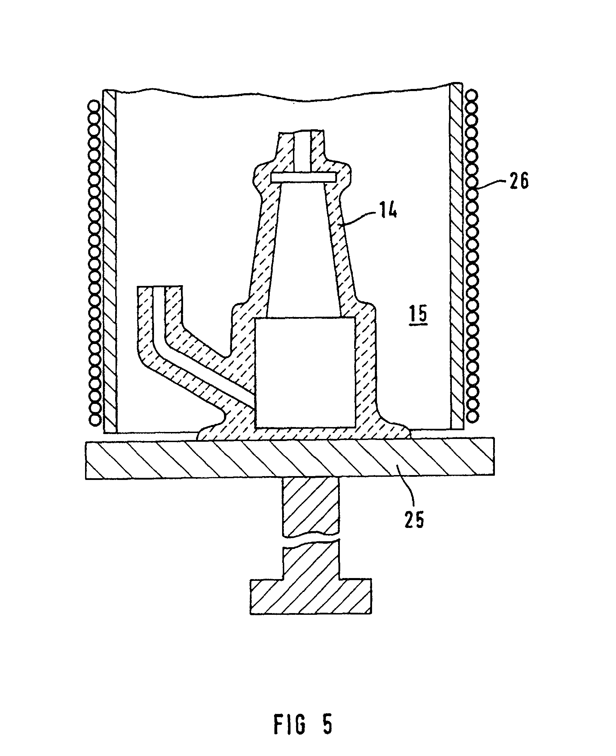

In Figur 5 ist in einem Längsschnitt -schematisch ein Ausschnitt einer Vorrichtung für eine thermisch kontrollierte Erstarrung einer metallischen Schmelze, insbesondere einer Kobaltbasis- oder Nickelbasis-Superlegierung dargestellt. Auf einer Abschreckplatte 25 ist eine nach unten geschlossene Gießform 14 für eine Turbinenschaufel 1 angeordnet. Diese Gießform 14 befindet sich in einer Heizzone 15, welche von einer Induktionsheizung 26 umgeben ist. Die Gießform 14 ist in vertikaler Richtung durch die Abschreckplatte 25 aus der Heizzone 15 mit einer kontrollierten Geschwindigkeit herausfahrbar. Die Gießform 14 wird vor Einbringung in die Heizzone 15 vorgeheizt und hat in der Heizzone 15 eine Temperatur, die vorzugsweise über der Schmelztemperatur der Legierung liegt. Die Heizzone 15 ist vorzugsweise in einem nicht dargestellten Vakuumofen angeordnet. Die geschmolzene Legierung wird in die Gießform 14 eingefüllt und dann mit einer vorgegebenen Geschwindigkeit aus der Heizzone herausbewegt bzw. die Induktionsheizung 26 mit einer vorgegebenen Geschwindigkeit in vertikaler Richtung von der Gießform 14 wegbewegt. Vorzugsweise wird eine Temperaturdifferenz in vertikaler Richtung über die Gießform 14 von über 110 °C erzeugt. Mit dem Verfahren zur thermisch kontrollierten Erstarrung einer Legierung, insbesondere einer Nickelbasis- oder Kobaltbasis-Superlegierung, wird eine Turbinenschaufel mit einem feinkörnigen Gefüge ähnlich dem Gefüge eines konventionell gegossenen Gußstückes erreicht. Hierbei weist die Turbinenschaufel 1 sowohl in Bereichen mit dünner Wandstärke, mit dicker Wandstärke oder aus Vollmaterial im wesentlichen dieselbe Kornstruktur auf und ist nahezu poren- und lunkerfrei.

Die Erfindung zeichnet sich durch eine Turbinenschaufel aus, welche in ihrem Inneren durch ein Kühlfluid kühlbar ist, insbesondere aus einer Nickel- oder Kobaltbasis-Superlegierung besteht, welche ein Gefüge mit einer mittleren Kornstruktur aufweist, und die Kornstruktur im wesentlichen der Kornstruktur einer konventionell gegossenen Legierung entspricht, die lunker- und porenfrei ist. Die Turbinenschaufel läßt sich durch ein entsprechend modifiziertes Verfahren zur thermisch kontrollierten Erstarrung herstellen, wobei gegenüber einem einkristallinen Herstellungsverfahren einkristalltypische Fehler im Gefüge vermieden werden.

## Patentansprüche

1. Turbinenschaufel (1), insbesondere Gasturbinenschaufel (1), welche sich entlang einer Hauptachse (2) von einem Fußbereich (3) über einen Schaufelblattbereich (4) zu einem Kopfbereich (5) erstreckt, und zumindest in dem Schaufelblattbereich (4) eine Zuführung (6) für Kühlfluid (16) aufweist, die von einer Schaufelaußenwand (7) geringer Wandstärke umgeben ist, wobei die Schaufelaußenwand (7) einen metallischen Werkstoff (8) mit einer ungerichteten Kornstruktur mit einer mittleren Korngröße in der Größenordnung der Korngröße eines konventionell gegossenen Werkstoffs aufweist und wobei eine die Zuführung (6) umgebende Innenwand (18) vorgesehen ist, wobei zwischen Innenwand (18) und Schaufelaußenwand (7) zumindest ein Kühlbereich (19) gebildet ist, der über einen Einlaß (12) mit der Zuführung (6) strömungstechnisch verbunden ist.

2. Turbinenschaufel (1) nach Anspruch 1, bei der Wärmeübertragungselemente (17) vorgesehen sind, die wärmetechnisch mit der Schaufelaußenwand (7) verbunden und von dem Kühlfluid (16) umströmbar sind.

3. Turbinenschaufel (1) nach Anspruch 2, bei der die Wärmeübertragungselemente (17) in einer Hauptströmungsrichtung (22) des Kühlfluids (16) versetzt hintereinander angeordnet sind.

4. Turbinenschaufel (1) nach Anspruch 1, 2 oder 3, bei der eine Abführung (21) für Kühlfluid (6) vorgesehen ist, die über den Kühlbereich (19) strömungstechnisch mit der Zuführung (6) verbunden ist.

5. Turbinenschaufel (1) nach einem der Ansprüche 1 bis 3, bei der die Schaufelaußenwand (7) einen Auslaß (20) für Kühlfluid (16) aufweist.

6. Turbinenschaufel (1) nach einem der vorhergehenden Ansprüche, bei der die Höhe (H) des Schaufelblattbereichs (4) zwischen 5 cm und 50 cm beträgt.

7. Turbinenschaufel (1) nach einem der vorhergehenden Ansprüche, bei der der Werkstoff (8) eine Nickelbasis- oder Kobaltbasis- Superlegierung ist.

8. Turbinenschaufel (1) nach einem der vorhergehenden Ansprüche, bei der die Wandstärke der Schaufelaußenwand (7) und/oder der Innenwand (18) einen minimalen Wert zwischen 0,5 mm und 5 mm aufweisen bzw. aufweist.

9. Turbinenschaufel (1) nach einem der vorhergehenden Ansprüche, welche eine Laufschaufel (1a) oder eine Leitschaufel (1b) einer Gasturbine, insbesondere einer stationären Gasturbine, ist.

10. Verfahren zur Herstellung einer Turbinenschaufel (1), die sich entlang einer Hauptachse (2) von einem Fußbereich (3) über einen Schaufelblattbereich (4) zu einem Kopfbereich (5) erstreckt, und zumindest in dem Schaufelblattbereich (4) einen Zuführung (6) für Kühlfluid (16) aufweist, die von einer Schaufelaußenwand (7) geringer Wandstärke umgeben ist, wobei eine Gießform (14) in einer Heizzone (15) oberhalb der Schmelztemperatur des Werkstoffs (8) der Turbinenschaufel (1) gehalten, die Gießform (14) mit geschmolzenem Werkstoff (8) gefüllt und die Gießform (14) so aus der Heizzone (15) herausbewegt wird, daß der Werkstoff (8) zumindest in der Schaufelaußenwand (7) eine ungerichtete Kornstruktur mit einer mittleren Korngröße wie ein konventionell gegossener Werkstoff (8) aufweist.

## Claims

1. Turbine blade (1), in particular a gas-turbine blade (1), which extends along a main axis (2) from a root region (3) over a blade body region (4) to a tip region (5) and has a feed (6) for cooling fluid (16) at least in the blade body region (4), which feed (6) is surrounded by a blade outer wall (7) of small wall thickness, the blade outer wall (7) having a metallic material (8) with a non-directional grain structure having an average grain size in the order of magnitude of the grain size of a conventionally cast material, and an inner wall (18), which surrounds the feed (6), being provided, at least one cooling region (19), which is fluidically connected to the feed (6) via an inlet (12), being formed between inner wall (18) and blade outer wall (7).

2. Turbine blade (1) according to Claim 1, in which heat-transfer elements (17), which are thermally connected to the blade outer wall (7) and around which the cooling fluid (16) can flow, are provided.

3. Turbine blade (1) according to Claim 2, in which the heat-transfer elements (17) are staggered one behind the other in a main flow direction (22) of the cooling fluid (16).

4. Turbine blade (1) according to Claim 1, 2 or 3 in which a discharge (21) for cooling fluid (16) is provided and is fluidically connected to the feed (6) via the cooling region (19).

5. Turbine blade (1) according to one of Claims 1 to 3, in which the blade outer wall (7) has an outlet (20) for cooling fluid (16).

6. Turbine blade (1) according to one of the preceding claims, in which the height (H) of the blade body region (4) is between 5 cm and 50 cm.

7. Turbine blade (1) according to one of the preceding claims, in which the material (8) is a nickel-based or cobalt-based superalloy.

8. Turbine blade (1) according to one of the preceding claims, in which the wall thickness of the blade outer wall (7) and/or of the inner wall (18) has a minimum value of between 0.5 mm and 5 mm.

9. Turbine blade (1) according to one of the preceding claims, which is a moving blade (1a) or a guide blade (1b) of a gas turbine, in particular a stationary gas turbine.

10. Method of producing a turbine blade (1) which extends along a main axis (2) from a root region (3) over a blade body region (4) to a tip region (5) and has a feed (6) for cooling fluid (16) at least in the blade body region (4), which feed (6) is surrounded by a blade outer wall (7) of small wall thickness, a casting mould (14) being held, in a heating zone (15), above the melting temperature of the material (8) of the turbine blade (1), the casting mould (14) being filled with molten material (8), and the casting mould (14) being moved out of the heating zone (15) in such a way that the material (8), at least in the blade outer wall (7), has a non-directional grain structure having an average grain size like a conventionally cast material (8).

## Revendications

1. Aube (1) de turbine, notamment aube(1) de turbine à gaz, qui s'étend le long d'un axe (2) principal d'une partie (3) de pied à une partie (5) de tête en passant par une partie (4) de lame d'aube et qui comporte au moins dans la partie (4) de lame d'aube une entrée (6) pour du fluide (16) de refroidissement, qui est entourée d'une paroi (7) extérieure d'aube de petite épaisseur de paroi, la paroi (7) extérieure d'aube comprenant un matériau (8) métallique ayant une structure de grain non dirigée, d'une granulométrie moyenne de l'ordre de grandeur de la granulométrie d'un matériau coulé classique et il est prévu une paroi (18) intérieure entourant l'entrée (6) et il est formé entre la paroi (18) intérieure et la paroi (7) extérieure d'aube au moins une zone (19) de refroidissement, qui communique du point de vue de la technique des fluides avec l'entrée (6) par une admission (12).

2. Aube (1) de turbine suivant la revendication 1, dans laquelle il est prévu des éléments (17) de transfert de la chaleur qui sont reliés du point de vue de la technique de la chaleur avec la paroi (7) extérieure d'aube et sur lesquels peut passer le fluide (16) de refroidissement.

3. Aube (1) de turbine suivant la revendication 2, dans laquelle les éléments (7) de transfert de la chaleur sont disposés l'un derrière l'autre en étant décalés dans une direction (22) principale d'écoulement du fluide (16) de refroidissement.

4. Aube (1) de turbine suivant la revendication 1, 2 ou 3, dans laquelle il est prévu une évacuation (21) pour le fluide (6) de refroidissement, qui communique du point de vue de la technique des fluides avec l'entrée (6) par l'intermédiaire de la zone (19) de refroidissement.

5. Aube (1) de turbine suivant l'une des revendications 1 à 3, dans laquelle la paroi (7) extérieure d'aube comporte une sortie (20) pour le fluide (16) de refroidissement.

6. Aube (1) de turbine suivant l'une des revendications précédentes, dans laquelle la hauteur (H) de la partie (4) de lame d'aube est comprise entre 5 cm et 50 cm.

7. Aube (1) de turbine suivant l'une des revendications précédentes, dans laquelle le matériau (8) est un superalliage à base de nickel ou à base de cobalt.

8. Aube (1) de turbine suivant l'une des revendications précédentes, dans laquelle l'épaisseur de la paroi (7) extérieure de l'aube et/ou de la paroi (18) intérieure ont/a une valeur minimum comprise entre 0,5 mm et 5 mm.

9. Aube (1) de turbine suivant l'une des revendications précédentes, qui est une aube (1a) mobile ou une aube (1b) directrice d'une turbine à gaz, notamment d'une turbine à gaz stationnaire.

10. Procédé de fabrication d'une aube (1) de turbine, qui s'étend le long d'un axe (2) principal d'une partie (3) de pied à une partie (5) de tête en passant par une partie (4) de lame d'aube et qui comporte au moins dans la partie (4) de lame d'aube une entrée (6) pour du fluide (16) de refroidissement, qui est entourée d'une paroi (7) extérieure d'aube de petite épaisseur de paroi, dans lequel on maintient une lingotière (14) de coulée dans une zone (15) de chauffage au-dessus du point de fusion du matériau (8) de l'aube (1) de turbine, on emplit la lingotière (14) de coulée de matériau (8) fondu et on sort la lingotière (14) de coulée de la zone (15) de chauffage de manière à ce que le matériau (8) ait, au moins dans la paroi (7) extérieure d'aube, une structure de grain non dirigée, d'une granulométrie moyenne comme un matériau (8) coulé classique.
